(19) Europäisches Patentamt
European Patent Office
Office européen des brevets

(11) EP 0 594 321 B1

(12) EUROPEAN PATENT SPECIFICATION

(45) Date of publication and mention of the grant of the patent:
**05.03.1997 Bulletin 1997/10**

(21) Application number: **93307857.8**

(22) Date of filing: **01.10.1993**

(51) Int Cl.$^6$: **C08L 101/08**, C08L 101/02, E04F 13/08, B05D 5/00 // (C08L101/08, 39:00), (C08L101/02, 33:06)

(54) **Aqueous composition**

Wässrige Zusammensetzung

Composition aqueuse

(84) Designated Contracting States:
**AT BE CH DE DK ES FR GB GR IE IT LI LU MC NL PT SE**

(30) Priority: **23.10.1992 US 965486**
**23.10.1992 US 965487**

(43) Date of publication of application:
**27.04.1994 Bulletin 1994/17**

(73) Proprietor: **ROHM AND HAAS COMPANY**
**Philadelphia Pennsylvania 19105 (US)**

(72) Inventor: **Xiaohong, Ci**
**Hatfield, Pennsylvania 19440 (US)**

(74) Representative: **Angell, David Whilton et al**
**ROHM AND HAAS**
**European Operations Patent Department**
**Lennig House**
**2 Mason's Avenue**
**Croydon CR9 3NB (GB)**

(56) References cited:
**EP-A- 0 409 459**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

The present invention relates to an aqueous composition. In particular, the present invention relates to an aqueous, quick-set, non-cementitious adhesive. More in particular, the present invention relates to an aqueous, quick-set, non-cementitious adhesive which provides early cohesive and adhesive strength and to a method for improving the early cohesive and adhesive strength of non-cementitious adhesives.

Exterior insulation and finishing systems ("EIFS") are multilayered composite systems installed on the outsides of buildings and other outdoor structures to insulate, protect and beautify. The exterior surface of the building or other outdoor structure may be constructed of concrete, cinder block, stone, brick, wood, gypsum board and the like. A layer of material, typically in the form of a solid or foamed sheet of material such as for example foamed and extruded polystyrene, is applied to the exterior surface of the building or other outdoor structure and is covered with a mesh-reinforced basecoat and then a topcoat.

The basecoat provides weather resistance, flexibility, toughness, mechanical strength and impact strength to the system. The topcoat provides aesthetic features to the surface of the system, such as for example color and texture.

If a mechanical fastening means is not used, an adhesive is needed to bond the layer of material to the exterior surface of the building or other outdoor structure. The adhesive may or may not contain cement. Problems are encountered both with adhesives which contain cement and adhesives which do not contain cement.

Calcium oxide, silica, alumina and iron oxide, in appropriate proportions, chemically combine at high temperatures to form a composite of hydraulic cement. When the hydraulic cement is contacted with water, its constituents begin to hydrate and to set into a hard substance typically on the order of one to three hours. This leaves only a short pot life for the application of adhesives which contain cement while they are still fluid. Contractors using a cement-containing adhesive must discard any unused material because it will not be usable after setting into a hard substance, usually in less than about five hours. This leads to considerable waste.

This waste problem may be avoided by using non-cementitious adhesives. However, conventional non-cementitious adhesives have experienced poor early adhesive and early cohesive problems because they lack the adhesive and cohesive strength provided by the cement. This drying time may be several days depending upon the environmental conditions. The problem is further exacerbated because the layer of material applied to the exterior surface of a building or other outdoor structure is typically a hydrophobic material, such as polystyrene foam, which impedes the movement of water out of the layered exterior finishing system. Until the layered exterior finishing system sets, the adhesive does not have sufficient cohesive and adhesive strength to bond the layer of material to the exterior surface of a building or other outdoor structure. This is particularly a problem in areas where the materials might be disturbed or where the weather is cold and wet or humid.

Contractors typically install EIFS in layers at the job site and as such their installation efficiency is limited by the time each layer or coating takes to set or dry. In addition, a quick drying exterior coating is needed so that it develops resistant to dirt pickup and washout by rain, snow, wind and the like so after its application. These problems associated with slow drying are exacerbated under certain environmental conditions, particularly cool and wet or humid conditions.

To reduce the cure time of the coatings, formulators have attempted to decrease the level of water in the coating formulation. However, this leads to coating formulations which are too viscous to apply.

EP-A-409459 discloses aqueous coating compositions which cure rapidly when exposed to air, and comprise an anionically stabilised latex, a polyfunctional amine and a volatile base. They are employed in paints, particularly road marking paints.

In contrast, the present invention seeks to overcome the problems associated with the prior art non-cementitious aqueous *adhesive* compositions.

In particular, it is an object of the present invention to provide a non-cementitious aqueous adhesive composition which is easily applied, provides early cohesive and adhesive strength under all curing conditions and leaves no waste.

It is a further object of the present invention to provide a method for improving the early cohesive and adhesive strength under all curing conditions of a non-cementitious adhesive.The most stringent curing conditions for such aqueous adhesive compositions are cool and damp conditions.

According to a first aspect of the present invention there is provided an aqueous, non cementitious adhesive composition comprising: (a) a film-forming latex polymer having an anionic character; (b) a water-soluble or water-dispersible polymer containing a plurality of functional amino groups and formed from a monomer system containing at least about 20% by weight of an amino- or imino-group containing monomer as hereinafter listed; (c) a volatile base in an amount effective to raise the pH of the composition to a point high enough where essentially all of the functional amino groups in the amine-containing polymer are in a nonionic state, and optionally a water-soluble or water-dispersible compound or complex of a multivalent metal.

In a second aspect of the present invention there is provided a method of coating a substrate comprising applying a layer of an aqueous non-cementitious adhesive, as defined above, to a substrate, such as an exterior surface of a building or other outdoor structure, and applying a solid or foamed layer of protective material to said non-cementitious

adhesive.

In a third aspect, there is provided a composite stucture comprising a substrate and a layer of material adhered to said substrate by means of an adhesive, said adhesive being formed from a layer of an aqueous non-cementitious adhesive as defined above. Preferably, the substrate is an exterior surface of a building or other outdoor structure, and the layer of material adhered thereto is a solid or foamed layer of protective material.

Preferably said water-soluble or water-dispersible amine-containing polymer is formed from a monomer system containing at least about 50% by weight of the selected amino- or imino-group containing monomer.

Preferably the said amino-group containing monomer is an N-acryloxyalkyl-oxazolidine.

Preferably said volatile base is ammonia.

Preferably the adhesive composition does contain a water-soluble or water-dispersible compound or complex of a multivalent metal, that multivalent metal preferably being zinc.

This invention solves the problems encountered with conventional cementitious and non-cementitious adhesives by providing an aqueous, quick-set noncementitious composition which is easily applied, develops early cohesive and adhesive strength under all curing conditons and leaves no waste. The invention is particularly useful as an adhesive used in exterior insulating finishing systems. This invention also provides a method for improving the early adhesive and cohesive strength under all curing conditions of a non-cementitious adhesive.

As used herein, the term "early" refers to the period when the adhesive is still wet; the term "cohesive strength" refers to the attractive force a material has for itself; whilst the term "adhesive strength" refers to the attractive force a material has for a substrate and to the strength to bond surfaces together. Also used herein is the term "glass transition temperature," or "$T_g$" which means the glass transition temperature of a polymer as calculated by the Fox equation [Bulletin of American Physics Society 1, 3, page 123 (1956)]:

$$\frac{1}{T_g} = \frac{W_1}{T_{g(1)}} + \frac{W_2}{T_{g(2)}}$$

For a copolymer, $w_1$ and $w_2$ refer to the weight fraction of the two comonomers and $T_{g(1)}$ and $T_{g(2)}$ refer to the glass transition temperatures of the two corresponding homopolymers.

The components of the adhesive compositions will now be described in more detail.

***FILM FORMING LATEX POLYMER***

The aqueous composition of the present invention requires a film-forming latex polymer having anionic character. "Latex" as used herein refers to a water-insoluble polymer which may be prepared by conventional polymerization techniques such as, for example, by emulsion polymerization. The latex polymer is formed from any monomer or mixture of monomers which yields a water-insoluble latex polymer which will form a film under the application conditions.

The $T_g$ of the latex polymer is limited only by the particular application for which the adhesive composition is to be used. For example, if an adhesive is to be applied outdoors in hot summer weather, then the composition of latex polymer may be selected to yield a $T_g$ greater than if the adhesive is to be applied outdoors in cold winter weather. Also, for example, if the coating is to be applied outdoors in hot summer weather, then the composition of latex polymer may be selected to yield a $T_g$ greater than if the coating is to be applied outdoors in cold winter weather. Generally, the latex polymer has a $T_g$ from -50°C to 50°C. A coating containing a latex polymer having a $T_g$ below -50°C is generally not useful since it is too soft and lack sufficient strength to act as an adhesive or it is too soft and sticky for coating applications.

A coating containing a latex polymer having a $T_g$ above 50°C is generally not useful since it is too hard to form a film even at higher than ambient temperatures.

Polymers having a $T_g$ from -15°C to 10°C are preferred. Polymers having a $T_g$ from -10°C to 5°C are most preferred.

The invention may also be practiced using polymers of more complex morphology, such as core-shell particles. These complex polymer morphologies usually display multiple $T_g$'s and may display a $T_g$ value outside the range of from -50°C to 50°C as one of its multiple $T_g$'s, however the average or effective $T_g$ of the polymer must be from -50°C to 50°C.

The anionic character of the film-forming latex polymer is obtained in any of several ways, the most common being the use of anionic surfactants or dispersants as the stabilizer during the emulsion polymerization or added to the emulsion after polymerization. Nonionic surfactants may also be present in the latex during or after polymerization of these anionically stabilized latexes.

Among the useful surfactants and dispersants are the salts of fatty rosin and naphthenic acids, condensation products of napthalene sulfonic acid and formaldehyde of low molecular weight, carboxylic polymers and copolymers of the appropriate hydrophile-lipophile balance, higher alkyl sulfates, such as sodium lauryl sulfate, alkyl aryl sulfonates,

such as dodecylbenzene sulfonate, sodium or potassium isopropylbenzene sulfonates or isopropylnaphthalene sulfonates; sulfosuccinates, such as sodium dioctylsulfosuccinate alkali metal higher alkyl sulfosuccinates, *e.g.* sodium octyl sulfosuccinate, sodium N-methyl-N-palmitoyltaurate, sodium oleyl isethionate, alkali metal salts of alkylarylpolyethoxyethanol sulfates or sulfonates, *e.g.*. sodium t-octylphenoxypolyethoxyethyl sulfate having 1 to 5 oxyethylene units, and the various other anionic surfactants and dispersants well-known in the art.

Another type of latex polymer having anionic character is that which is obtained as a result of including in the polymer small amounts of acidic groups, which may be in the salt form, such as an alkali metal or ammonium salt. Examples of such acidic groups are those derived from incorporated initiator fragments, maleic acid, vinyl sulfonic acid, crotonic acid, acrylic acid, methacrylic acid, itaconic acid.

A third useful type of latex polymer having anionic character is a latex polymer which includes a basic monomer which has been neutralized, such as for example acrylamide, methacrylamide.

The latex polymer may have more than one type of anionic character.

The latex polymer having anionic character can be prepared by known procedures, which are published in texts on the subject such as Emulsion Polymerization: Theory and Practice by D. C. Blackley published by Wiley in 1975 and Emulsion Polymerization by F. A. Bovey *et al.* published by Interscience Publishers in 1965.

In general, the latex polymer is a polymer or copolymer prepared from monomers such as methyl acrylate, ethyl acrylate, butyl acrylate, 2-ethylhexyl acrylate, decyl acryate, methyl methacrylate, ethyl methacrylate, butyl methacrylate, styrene, butadiene, ethylene, vinyl acetate, vinyl ester of "Versatic" acid (a tertiary monocarboxylic acid having $C_9$, $C_{10}$ and $C_{11}$ chain length, the vinyl ester is also known as "vinyl versatate"), vinyl chloride, vinyl pyridine, vinylidene chloride, acrylonitrile, chloroprene, acrylic acid, methacrylic acid, itaconic acid, maleic acid and fumaric acid. Polymers and copolymers of $\alpha,\beta$-ethylenically unsaturated monomers and their esters, especially the acrylic and methacrylic esters, are preferred and are preferably prepared by processes given in "Emulsion Polymerization of Acrylic Monomers: May, 1966" published by the Rohm and Haas Company, Philadelphia, Pennsylvania, incorporated herein by reference.

## *AMINE-CONTAINING POLYMER*

The aqueous composition of the present invention requires an amine-containing polymer which has been formed from at least 20% by weight of a monomer which contains amine or imine functional groups. A polymer obtained from a monomer system containing at least 50% by weight of monomer containing amine or imine functional groups is preferred. It is also preferable that the average molecular weight of the water-soluble or water-dispersible amine-containing polymer is from 5,000 to 100,000.

The monomers containing amine or imine functional groups from which the amine-containing polymers may be prepared are the following:

1. Aminoalkyl vinyl ethers or sulfides wherein the alkyl groups may be straight-chain or branched-chain type and have from two to three carbon atoms and wherein the nitrogen atom may be a primary, secondary, or tertiary nitrogen atom (US-A-2,879,178). In the latter instance, one of the remaining hydrogen atoms may be substituted by alkyl, hydroxyalkyl, or alkoxyalkyl groups, the alkyl components of which may have one to four carbon atoms, preferably one carbon atom only.

Specific examples include: β-aminoethyl vinyl ether; β-aminoethyl vinyl sulfide; N-monomethyl-β-aminoethyl vinyl ether or sulfide; N-monoethyl-β-aminoethyl vinyl ether or sulfide; N-monobutyl-β-aminoethyl vinyl ether or sulfide; and N-monomethyl-3-aminopropyl vinyl ether or sulfide.

2. Acrylamide or acrylic esters of the formula II:

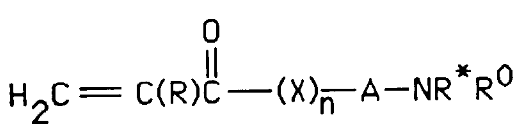

(II)

wherein

R is H or $CH_3$;
n is 0 or 1;
X is O or N(H);
when n is zero, A is $O(CH_2)_x$

wherein x is 2 to 3, or $(O\text{-alkylene})_y$ wherein $(O\text{-alkylene})_y$ is a poly(oxyalkylene) group, having a molecular weight in the range from 88 to 348, in which the individual alkylene radicals are the same or different and are either ethylene or propylene; and when n is 1, A is an alkylene group having two to 4 carbon atoms;

$R^*$ is H, methyl, or ethyl; and
$R^1$ is H, methyl, or ethyl; and
$R^0$ is H, phenyl, benzyl, methylbenzyl, cyclohexyl, or ($C_1$-$C_6$) alkyl.

Examples of compounds of formula II include: dimethylaminoethylacrylate or methacrylate; β-aminoethyl acrylate or methacrylate; N-β-aminoethyl acrylamide or methacrylamide; N-(monomethylaminoethyl)-acrylamide or methacrylamide; N-(mono-n-butyl)-4-aminobutyl acrylate or methacrylate; methacryloxyethoxy ethylamine; and acryloxypropoxypropylamine.

3. N-acryloxyalkyl-oxazolidines and N-acryloxyalkyl tetrahydro-1,3-oxazines and the corresponding components in which the "alkyl" linkage is replaced by alkoxyalkyl and poly(alkoxy-alkyl), all of which are embraced by Formula III:

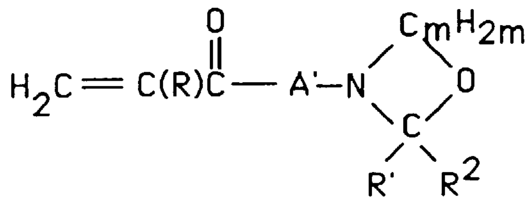

(III)

wherein

R is H or $CH_3$;
m is an integer having a value of 2 to 3;
R', when not directly joined to $R^2$, is selected from the group consisting of hydrogen, phenyl, benzyl, and ($C_1$-$C_{12}$) alkyl groups;
$R^2$, when not directly joined to R', is selected from the group consisting of hydrogen and ($C_1$-$C_4$) alkyl groups;
R'and $R^2$, when directly joined together, form a 5- to 6-carbon ring with the attached carbon atom of the ring in the formula, *i.e.,* R'and $R^2$ , when joined together, are selected from the group consisting of pentamethylene and tetramethylene; and
A' is $O(C_mH_{2m})$- or $(O\text{-alkylene})_n$ in which $(O\text{-alkylene})_n$ is a poly(oxyalkylene) group, having a molecular weight in the range from 88 to 348, in which the individual alkylene radicals are the same or different and are either ethylene or propylene.

The compounds of Formula III can hydrolyze under various conditions to secondary amines. The hydrolysis produces products having the Formula IV:

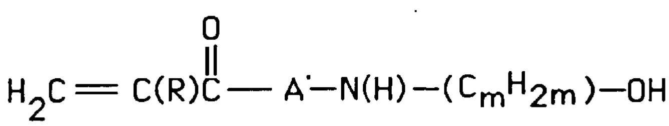

(IV)

The compounds of Formula III are disclosed in US-A-3,037,006 and US-A-3,502,627 in the hands of a common assignee, and their corresponding foreign applications and patents and any of the monomeric compounds disclosed therein may be used in making the copolymers to be used in the composition of the present invention.

Examples of compounds of Formula III include:

oxazolidinylethyl methacrylate;
oxazolidinylethyl acrylate;
3-(γ-methacryl-oxypropyl)-tetrahydro-1,3-oxazine;
3-(β-methacryloxyethyl)-2,2-pentamethylene-oxazolidine;
3-β-methacryloxyethyl-2-methyl-2-propyloxazolidine;
N-2-(2-acryloxyethoxy)ethyl-oxazolidine;
N-2-(2-methacryloxyethoxy)ethyl-oxazolidine;
N-2-(2-methacryloxyethoxy)ethyl-5-methyl-oxazolidine;
N-2-(2-acryloxyethoxy)ethyl-5-methyl-oxazolidine;

3-[2-(2-methacryloxyethoxy)ethyl)]-2,2-penta-methylene-oxazolidine;
3-[2-(2-methacryloxyethoxy)ethyl)]-2,2-dimethyl-oxazolidine;
3-[2-(methacryloxyethoxy)ethyl]-2-phenyl-oxazolidine.

4. Polymers of monomers which readily generate amines by hydrolysis are useful as the amine-containing component or to generate the amine-containing component polymer of this binder composition. Examples of such monomers are acryloxy-ketimines and -aldimines, such as those of Formulas V and VI following:

$$H_2C{=}(CR){-}COOA''N{=}Q \qquad (V)$$

$$H_2C = C(R){-}CO{-}(D)_{n''-1} - (B)_{n'-1} - (A^{\circ})_{n^{\circ}-1} - N = Q \qquad (VI)$$

wherein

R is H or $CH_3$;
Q is selected from the group consisting of

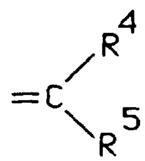 , 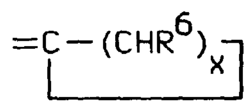 ,

and $=CHR^3$ ;
$R^6$ is H or it may be methyl in one $CHR^6$ unit;
$R^5$ is selected from the group consisting of $(C_1$-$C_{12})$-alkyl and cyclohexyl groups;
$R^4$ is selected from the group consisting of $(C_1$-$C_{12})$-alkyl and cyclohexyl;
R3 is selected from the group consisting of phenyl, halophenyl, $(C_1$-$C_{12})$-alkyl, cyclohexyl, and $(C_1$-$C_4)$ alkoxyphenyl groups;
A" is a $(C_1$-$C_{12})$ alkylene group;
A°, B and D are the same or different oxyalkylene groups having the formula $-OCH(R^7)-CH(R^7)-$wherein $R^7$ is H, $CH_3$, or $C_2H_5$;
x is an integer having a value of 4 to 5;
n° is an integer having a value of 1 to 200;
n' is an integer having a value of 1 to 200; and
n" is an integer having a value of to 200, the sum of n -1, n'-1 and n"-1 having a value of 2 to 200.

Illustrative compounds of formulas V and VI are:

2-[4-(2,6-dimethylheptylidene)-amino]-ethylmethacrylate;
3-[2-(4-methylpentylidine)-amino]-propyl methacrylate;
β-(benzylideneamino)-ethyl methacrylate;
3-[2-(4-methylpentylidene)-amino]-ethylmethacrylate;
2-[4-(2,6-dimethylheptylidene)-amino]-ethylacrylate;
12-(cyclopentylidene-amino)-dodecylmethacrylate;
N-(1,3-dimethylbutylidene)-2-(2-methacryloxyethoxy)-ethylamine;
N-(benzylidene)-methacryloxyethoxyethylamine;
N-(1,3-dimethylbutylidene)-2-(2-acryloxyethoxy)-ethylamine;
N-(benzylidene)-2-(2-acryloxyethoxy)ethylamine.

The compounds of Formulas V and VI hydrolyze in acid, neutral, or alkaline aqueous media to produce the corresponding primary amines or salts thereof in which the group -N = Q of the formulas becomes $-NH_2$ and O = Q. The compounds of Formulas V and VI are disclosed in US-A-3,037,969 and US-A-3,497,485, and any of the monomeric

compounds therein disclosed may be used in the making of the copolymers to be used in the water-soluble polymer portion of the compositions of the present invention.

The preferred class of amine-containing polymers of this invention are water-soluble. By water-solubility is meant that the polymer is completely soluble either in free-base, neutral, or salt form. The solubility preferably exists at all pH's, especially in the range of 4 to 10. A less preferred class of water-soluble amine-containing polymers are generally insoluble at high pH and soluble or partly soluble at acidic pH values, particularly in the pH range from about 4 to about 7.

By partly soluble is meant both the situation in which some of the polymer is soluble in water as well as that in which the entire polymer dissolves in the form of micelles or aggregates individual molecules, generally, highly water swollen aggregates. The latter are often called colloidal solutions.

It is preferred that most of the polymer be soluble at the acidic pH values.

The water-soluble amine-containing polymers of this invention include both the completely soluble and the partly soluble polymers as described immediately above.

A useful but still less preferred class of amine-containing polymers are those which are water-insoluble and, as will be noted below, have a molecular weight corresponding to the lower end of the range for the water-soluble counterparts. These water-insoluble amine-containing polymers perform the same function as the water-soluble polymers. When these water-insoluble polymers are substituted for the water-soluble polymers, the early cohesive strength of the anionically stabilized latex polymer is improved; however, the improvement is usually not as great as that produced by the water-soluble polymers.

In general, the amine-containing polymers of at least 20% by weight of a monomer of categories 1, 2, 3, and 4, *supra,* may be obtained by solution polymerization in aqueous media, either neutral, alkaline, or acidic, depending upon the particular polymer sought. Generally, the polymerization is carried out in an aqueous medium containing a small amount of an acid, either organic or inorganic, such as acetic acid or hydrochloric acid. The amine-containing polymers include copolymers with up to 80% by weight one or more such as methyl acrylate, acrylamide, methacrylamide, and quaternary ammonium salts derived from the amine monomers, such as 2-methacryloxyethyl trimethyl ammonium chloride. Small amounts of relatively insoluble comonomers may also be used to obtain the water-soluble polymers.

The insoluble polymers may contain larger amounts of these comonomers. Such monomers include, as examples, acrylic acid esters with ($C_1$-$C_{18}$) alcohols and methacrylic acid esters with alcohols having one to 18 carbon atoms, especially ($C_1$-$C_4$) alkanols; styrene, vinyltoluene, vinyl acetate, vinyl chloride, vinylidene chloride, substituted styrenes, butadiene, substituted butadienes, ethylene; and the nitriles and amides of acrylic or of methacrylic acid. The particular comonomer or comonomers used in making a given amine-containing polymer depends upon the proportion of amine-containing monomer used in making the copolymer. Preferably, a comonomer with relatively high solubility in water is exclusively used to make the water-soluble polymers. The polymers are thus polymers or copolymers of cationic and, optionally, nonionic vinyl monomers. Examples of the cationic monomers are the amines, imines and quaternary ammonium salts; the other recited monomers are nonionic.

Thus, these water-soluble copolymers contain no acid groups other than trace amounts which may be present due to impurities in the monomers used or to small extent of hydrolysis during synthesis, storage or use.

The insoluble amine-containing polymers have a viscosity average molecular weight from 5,000 to 100,000, with the range of from 15,000 to 90,000 preferred.

The molecular weight of the water-soluble polymers may fall within a wide range; typically, the viscosity average molecular weight is from 5,000 to 300,000, with the range of from 40,000 to 100,000 preferred. The amount of the amine-containing polymer may range from 0.1% to 20% by weight of the total weight of anionic latex polymer and amine-containing polymer, the range from 0.5%, preferably 1%, to 8% being preferred.

Water-soluble amine-containing polymers include both the completely soluble and the partly soluble polymers. The term water-soluble amine-containing polymer describes polymer that is completely soluble either in free-base, neutral, or salt form. Some polymers are soluble at all pH's, while others are soluble over a range of pH for example from 5 to 10. Other amine-containing polymers are generally insoluble at high pH and soluble or partly soluble at acidic pH values, particularly in the pH range from 5 to 7. By partly soluble is meant both the situation in which some of the polymer is soluble in water as well as that in which the entire polymer dissolves in the form of micelles or aggregates of individual molecules, generally, highly water swollen aggregates. The latter are often called colloidal solutions. It is preferred that most of the polymer be soluble at the acidic pH values.

In general, the amine-containing polymers may be obtained by solution polymerization in aqueous media, either neutral, alkaline, or acidic, depending upon the particular polymer sought, as generally known in the art, for example as taught in US-A-4,119,600.

Generally, the polymerization is carried out in an aqueous medium containing a small amount of an acid, either organic or inorganic, such as acetic acid or hydrochloric acid. The amine-containing polymers include copolymers with up to 80% by weight one or more monoethylenically unsaturated monomers, such as methyl acrylate, acrylamide and methacrylamide.

Small amounts of relatively insoluble comonomers may also be used to obtain the water-soluble polymers. The insoluble polymers may contain larger amounts of these comonomers. Such monomers include, as examples, acrylic acid esters with ($C_1$-$C_{18}$) alcohols and methacrylic acid esters with alcohols having one to 18 carbon atoms, especially ($C_1$-$C_4$) alkanols; styrene, vinyltoluene, vinyl acetate, vinyl chloride, vinylidene chloride, substituted styrenes, butadiene, substituted butadienes, ethylene; and the nitriles and amides of acrylic or of methacrylic acid.

The particular comonomer or comonomers used in making a given amine-containing polymer depends upon the proportion of amine-containing monomer used in making the copolymer. The polymers are thus polymers or copolymers of cationic and, optionally, nonionic vinyl monomers. Examples of the cationic monomers are the amines and imines; the other recited monomers are nonionic. Thus, these water-soluble copolymers contain no acid groups other than trace amounts which may be present due to impurities in the monomers used or to small extent of hydrolysis during synthesis, storage or use.

***VOLATILE BASE***

The aqueous composition of this invention requires a volatile base. The type and amount of volatile base used must be sufficient to raise the pH of the composition to about the point where the amine functional groups of the amine-containing polymer are non-ionized (deprotonated), typically to at least pH 5, preferably from pH 7 to pH 9, to avoid interaction with the anionically stabilized latex polymer and other anionic components in the adhesive composition.

A starting point estimate of the amount of volatile base required to reach this point can be calculated from the number of equivalents of base needed to neutralize all of the acid groups in the latex *(i.e.* acid groups from: copolymerized carboxylic-bearing monomer; surfactant; or initiator) and the conjugate acid of the amine base.

If the amine is not sufficiently deprotonated, the emulsion will exhibit observeable signs of instability over time, such as viscosity increase and microscopically observeable "particle rafting," an early stage of aggregation/gellation. One equivalent of volatile base (based on latex acids and polyamine titers) is usually enough to yield a stable system although higher levels of volatile base (~3 to 4 equivalents) may be necessary for long term stability.

Higher amounts of volatile base can be used without departing from the spirit of the invention although the "quick dry" properties of the coating may be reduced. If the equipment used in the process of manufacture presents opportunities for loss of the volatile base by evaporation at any stage from when the volatile base is added until after the product is packaged in a sealed container, the amount of volatile amine loaded to the production equipment should be increased to offset the loss.

After application, the volatile base evaporates lowering the pH of the composition. When the pH of the composition falls to a point where the protonation of the amine functional group begins to occur, the amine functional group becomes cationic.

The quick dry is believed to be initiated by this conversion of the amine functional group to a cationic state in the presence of the anionically stabilized emulsion polymer, although the exact mechanism that produces the quick-dry property has not been established and we do not wish to bound by the theory of the exact mechanism.

Suitable volatile bases include but are not limited to ammonia, morpholine, alkyl amines, 2-dimethylaminoethanol, N-methylmorpholine, ethylenediamine, and mixtures thereof. Ammonia is preferred.

***MULTIVALENT METAL***

In the preferred embodiment, the aqueous quick-set, non-cementitious adhesive contains a water-soluble or water-dispersible multivalent metal in the form of a metal ion, salt, complex or oxide. Multivalent metal ions such as calcium, magnesium, zinc, barium, strontium, aluminum and the like may be used. Complexes of multivalent metal ions, such as zinc hexammonia, zinc ammonium bicarbonate and salts of multivalent metal ions with counterions, such as chloride, acetate, bicarbonate may be used. Zinc is the preferred multivalent metal.

The multivalent metal ion, salt, complex or oxide is useful at a level of from 0.5% by weight to 10% by weight, based on the weight of the latex polymer solids. A level of from 1% by weight to 7% by weight, based on the weight of the latex polymer solids, is preferred.

In addition, conventional additional components such as, for example those for adhesives and coatings - namely pigments, binders, vehicles, extenders, dispersants, surfactants, coalescents, wetting agents, rheology modifiers, thickeners, drying retarders, antifoaming agents, colorants, waxes, preservatives, heat stabilizers, solvents, anti-skinning agents, driers - may be used in this invention.

Care must be exercised when selecting the type and amount of additives to avoid altering the pH of the composition to an extent that interferes with storage stability or buffering the pH to an extent that after application the pH does not fall sufficiently to initiate protonation of the polyamine.

For example an adhesive prepared using a polyamine with a relatively low pKa and too large an amount of calcium carbonate as filler, may display an unacceptably extended cure time.

The adhesive compositions of the invention typically have a solids content in the range of from 10% by weight to 75% by weight and a viscosity of from 50,000 $mNsm^{-2}$ (centipoises) to 300,000 $mNsm^{-2}$ (centipoises).

The aqueous, quick-set coating compositions of the present invention may contain fillers such as sand, calcium carbonate. The coating may be applied by trowel, spraying, typically in thickness of from 0.08 cm (1/32 inch) to 0.16 cm (1/8 inch).

The adhesive compositions of the present invention are useful in any type of construction adhesive application where early adhesive and cohesive strength is needed, such as for example, EIFS; cove base; floor tile including vinyl, ceramic, and wood; plywood.

Therefore one method of the present invention is useful for improving the early cohesive strength of a non-cementitious adhesive. This method involves: (1) forming an non-cementitious adhesive containing: (a) film-forming latex polymer having anionic character; (b) an amine-containing polymer formed from at least 20% by weight monomer containing amine functional groups; and (c) a volatile base; (2) applying the non-cementitious adhesive to the exterior surface of a building or other outdoor structure; and (3) applying a solid or foamed layer of protective material to the non-cementitious adhesive.

The building and other structures may be formed from concrete, cement, brick, cinder block, wood, gypsum board, particle board and the like. The solid or foamed layer of protective material may be foamed polystyrene sheet.

Another method of the present invention is useful for improving the early washout resistance and dirt pick-up resistance of an aqueous, quick-set coating.

This method involves: (1) forming an aqueous, quick-set coating containing: (a) a film-forming latex polymer having anionic character; (b) an amine-containing polymer formed from at least 20% by weight monomer containing amine functional groups; (c) a volatile base; and (d) a water-soluble or water-dispersible multivalent metal; and (2) applying the an aqueous, quick-set coating to a substrate.

The substrate may be formed from concrete, cement, brick, cinder block, wood, gypsum board, particle board.

The present invention will now be described only by way of examples.

**EXAMPLE 1. PREPARATION OF ADHESIVE FORMULATIONS**

The adhesives were prepared according to the following formulation by grinding together the ingredients listed as grind ingredients in Table 1.1 and then adding the remaining letdown ingredients for each adhesive formulation.

All quantities listed are in grams.

Table 1.1

| | **Comparative Adhesive 1** | **Adhesive 1** | **Adhesive 2** |
|---|---|---|---|
| ***Grind Ingredients*** | | | |
| Anionically stabilized Latex Polymer (Rhoplex® AC-264 latex) (60% solids) | 330.7 | 330.7 | 330.7 |
| Ammonium hydroxide (28%) | 5 | 5 | 5 |
| Polyoxazolidinylethyl methacrylate (25% solids) | 0 | 4 | 4 |
| Zinc oxide | 0 | 0 | 100 |
| Calcium carbonate | 100 | 100 | 0 |
| Anionic dispersant (Tamol ® 850 dispersant (30% total solids) | 2.5 | 2.5 | 2.5 |
| Potassium tripolyphosphate | 1.5 | 1.5 | 1.5 |
| Ethylene glycol | 2 | 2 | 2 |
| Texanol® coalescent (2,2,4-trimethyl-3-hydroxypentyl acetate) | 2 | 2 | 2 |
| Antifoaming agent (Nopco® NXZ antifoamer) | 4 | 4 | 4 |
| Clay filler | 15 | 15 | 15 |
| Marble dust | 400 | 400 | 400 |
| Sand #70 | 400 | 400 | 400 |

Table 1.1 (continued)

| | Comparative Adhesive 1 | Adhesive 1 | Adhesive 2 |
|---|---|---|---|
| ***Letdown Ingredients*** | | | |
| Water | 20 | 20 | 20 |
| Hydroxyethyl cellulose (Natrasol® HR thickener) | 0.3 | 0.3 | 0.3 |

**EXAMPLE 2. SET TIME**

The adhesive formulations were tested to determine how long they took to completely set. The test specimens were prepared by casting each adhesive formulation on Teflon®-coated glass at a thickness of from about 0.079 cm (1/32 inch) to about 0.16 cm (1/16 inch).

Testing was done at a temperature of 22.2°C (72°F) and relative humidity of 32.8%. A Gardner Set Time Recorder was then placed on each freshly made test specimen. The probe on the recorder moves at one revolution per hour through or on top of the adhesive. Set time is reported in minutes and was established when the probe completely moved on the surface of the adhesive without making any trace mark on the surface.

Short set times are desirable because they indicate that the adhesive builds early cohesive and adhesive strength. The results are reported in Table 2.1.

Table 2.1

| Adhesive | Set Time (minutes) |
|---|---|
| Comparative 1 | 85 |
| 1 | 60 |
| 2 | 35 |

The set time decreased by 25 minutes for the adhesive formulation made according to the invention (Adhesive 1).

The set time decreased by a total of 50 minutes for the adhesive formulation made according to the invention which optionally contained multivalent metal (Adhesive 2 -- contained zinc oxide).

**EXAMPLE 3. TENSILE STRENGTH TESTING**

The adhesive formulations were tested for early tensile bond strength under a variety of curing conditions to demonstrate that the aqueous adhesive compositions of the invention showed improved properties under all curing conditions. In a pre-equilibration chamber, samples were prepared by using a two-part epoxy to glue circular pieces of expanded polystyrene foam (2.54 cm (1 inch) thick) to a wood disk (5.7 cm (2.25 inch) diameter; 1.27 cm (0.5 inch) thick). In a like manner, plywood was also glued to a second wood disk.

A layer of each adhesive formulation was applied onto the plywood surface of the second wood disk using a spatula and then polystyrene side of the first wood disk was firmly pressed against the layer of adhesive. Each sample was then cured. Before testing, all samples were equilibrated to test conditions. The sample was then placed in the jaws of an Instron testing machine with the sample being pulled apart at an angle perpendicular to the layer of adhesive. All samples were tested at a crosshead speed of 1.27 cm(0.5 inches)/minute. Tensile strength was reported in x 14.3 kg/cm$^2$ - which is equivalent to x 1 pound per square inch (based on the calculation that 1 lb/in$^2$ is equivalent to 0.7 kg/cm$^2$)-as the ratio of the load at break from the Instron (pounds) to the surface area of the test specimen (square inches). The results are reported in Table 3.1. High tensile strengths at break are desirable. In addition, substrate failure (polystyrene) types are more desirable than adhesive failure types.

Table 3.1

| | Comparative Adhesive | Adhesive 1 | Adhesive 2 |
|---|---|---|---|
| **Tensile strength* at break (pounds/square inch)** | 20.1 | 25.3 | 34.4 |

*x 14.3 kg/cm$^2$ - which is equivalent to x 1 pound per square inch (based on the calculation that 1 lb/in$^2$ is equivalent to 0.7 kg/cm$^2$)

Table 3.1 (continued)

| | Comparative Adhesive | Adhesive 1 | Adhesive 2 |
|---|---|---|---|
| *NOTES:*<br>*Cured at ambient conditions for 4 hours*<br>*Tested at 75°F **and 50% relative humidity -- warm*<br>*Thickness of adhesive = 1/32 inch**** | | | |
| **Tensile strength* at break (pounds/square inch)** | 3.4 | 7.5 | 13.6 |
| *NOTES:*<br>*Cured at ambient conditions for 3 hours*<br>*Tested at 75°F **and 50% relative humidity -- warm*<br>*Thickness of adhesive = 1/8 inch***** | | | |
| **Tensile strength* at break (pounds/square inch)**<br>**Failure type** | 16.6<br>100% adhesive failure | 19.0<br>90% adhesive failure/10% substrate failure | 29.5<br>100% substrate failure |
| *NOTES:*<br>*Cured at ambient conditions for 2 hours*<br>*Tested at 75°F **and 50% relative humidity -- warm*<br>*Reported as average of 5 measurements*<br>*Thickness of adhesive = 1/6 inch****** | | | |
| **Tensile strength* at break (pounds/square inch)**<br>**Failure type** | 21.6<br>70% adhesive failure/30% substrate failure | 31.4<br>100% substrate failure | 34.9<br>100% substrate failure |
| *NOTES:*<br>*Cured at 82°F ******and 94.5% relative humidity for 5 hours -- warm and very humid*<br>*Tested at 75°F **and 50% relative humidity -- warm*<br>*Reported as average of 5 measurements*<br>*Thickness of adhesive = 1/16 inch* | | | |

*x 14.3 kg/$cm^2$ - which is equivalent to x 1 pound per square inch (based on the calculation that 1 lb/$in^2$ is equivalent to 0.7 kg/$cm^2$)

** equivalent to 24°C -

*** equivalent to 0.08 cm -

****equivalent to 0.32 cm -

*****equivalent to 0.16 cm -

******equivalent to 28°C

The tensile strength increased at both thicknesses for the adhesive formulation made according to the invention (Adhesive 1) as compared to the the adhesive which did not contain an amine-containing polymer (Comparative Adhesive 1). The tensile strength increased even more at both thicknesses for the adhesive formulation made according to the invention which optionally contained multivalent metal (Adhesive 2 -- contained zinc oxide).

The tensile strength increased for the adhesive formulation made according to the invention (Adhesive 1) as compared to the the adhesive which did not contain an amine-containing polymer (Comparative Adhesive 1) under warm conditions and very humid conditions. The tensile strength increased even more for the adhesive formulation made according to the invention which optionally contained multivalent metal (Adhesive 2 -- contained zinc oxide) under warm conditions and under wet and very humid conditions. Under warm conditions, the adhesive which optionally contained the zinc oxide experienced a desirable 100% substrate failure (Adhesive 2) and the comparative adhesive experienced an undesirable 100% adhesive failure. Under very humid curing conditions, Adhesive 1 and Adhesive 2 both experienced a desirable 100% substrate failure.

**EXAMPLE 4. SHEAR STRENGTH TESTING**

The adhesive formulations were tested for early shear strength under a variety of curing conditions to demonstrate that the aqueous adhesive compositions of the invention showed improved properties under all curing conditions. In a pre-equilibration chamber, samples were prepared by using a two-part epoxy to glue rectangular pieces of expanded polystyrene foam (2.54 cm (1 inch) thick) to a wood piece (7.62 cm (3 inches) by 5.08 cm (2 inches)).

In a like manner, plywood or cementitious board was cut into 7.62 cm by 5.08 cm (3 inch-by-2 inch) pieces.

A layer of each adhesive formulation (0.16 cm - 0.08 cm (1/32-1/16 inch thickness)) was applied onto the plywood or cementitious board using a spatula and then polystyrene side of the wood piece was firmly pressed against the layer of adhesive. Each sample was then cured at room temperature. Before testing, all samples were equilibrated to test conditions. The sample was then placed in the jaws of a Tinius Olsen Stress Tester with the sample being pulled apart at an angle 180° to the layer of adhesive. All samples were tested at a crosshead speed of 1.27 cm (0.5 inches)/minute. Shear strength was reported in pounds per square inch as the ratio of the load at break from the Stress Tester (pounds) to the surface area of the test specimen (square inches). The results are reported in Table 4.1. High shear strengths at break are desirable. In addition, substrate failure types are more desirable than adhesive failure types.

Table 4.1

| | Comparative Adhesive 1 | Adhesive 1 | Adhesive 2 |
|---|---|---|---|
| ***Plywood Substrate*** | | | |
| **Shear strength *at break (ponds/square inch)** | 7.5 | 9.7 | 11.7 |
| **Failure type** | 100% adhesive failure | 90% adhesive failure/10% substrate failure | 90% adhesive failure/10% substrate failure |
| *NOTES:*<br>*Cured at 75° F *and 50% relative humidity for 3 hours -- warm*<br>*Tested at 75° F * and 50% relative humidity -- warm*<br>*Reported as average of 2 measurements* | | | |
| ***Cementitious Substrate*** | | | |
| **Shear strength *at break (ponds/square inch)** | 9.0 | 13.1 | 16.2 |
| **Failure type** | 90% adhesive failure/10% substrate failure | 80% adhesive failure/20% substrate failure | 20% adhesive failure/80% substrate failure |
| *NOTES:*<br>*Cured at 75° F *and 50% relative humidity for 3 hours -- warm*<br>*Tested at 75° F * and 50% relative humidity -- warm*<br>*Reported as average of 2 measurements* | | | |

*x 14.3 kg/cm$^2$ - which is equivalent to x 1 pound per square inch (based on the calculation that 1 lb/in$^2$ is equivalent to 0.7 kg/cm$^2$)
** equivalent to 24°C

The shear strength increased on both types of substrates for the adhesive formulation made according to the invention (Adhesive 1) as compared to the adhesive which did not contain an amine-containing polymer (Comparative Adhesive 1) under warm conditions. The shear strength increased on both types of substrates even more for the adhesive formulation made according to the invention which optionally contained multivalent metal (Adhesive 2 -- contained zinc oxide) under warm conditions.

**Claims**

**1.** An aqueous, non cementitious adhesive composition comprising:

(A) a film-forming latex polymer having anionic character;

(B) a water-soluble or water-dispersible polymer containing a plurality of functional amino groups and formed

from a monomer system containing at least 20% by weight of an amino- or imino-group containing monomer selected from:

i) aminoalkyl vinyl ethers or sulfides wherein the alkyl groups may be straight-chain or branched-chain type and have from two to three carbon atoms and wherein the nitrogen atom may be primary, secondary, or tertiary;

ii) acrylamide, or acrylic esters of Formula II:

(II) 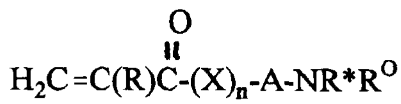

wherein

R is H or $CH_3$;
n is 0 or 1;
X is O or N(H);
when n is zero, A is $O(CH_2)_x$
wherein x is 2 to 3, or (O-alkylene)$_Y$ wherein (O-alkylene)$_y$ is a poly(oxyalkylene) group, having a molecular weight in the range 88 to 348, in which the individual alkylene radicals are the same or different and are either ethylene or propylene; and when n is 1, A is an alkylene group having from 2 to 4 carbon atoms;
R* is H, methyl, or ethyl;
$R^1$ is H, methyl, or ethyl; and
$R^0$ is H, phenyl, benzyl, methylbenzyl, cyclohexyl, or ($C_1$-$C_6$) alkyl;

iii) N-acryloxyalkyl-oxazolidines and N-acryloxyalkyl tetrahydro-1,3-oxazines of Formula III:

(III) 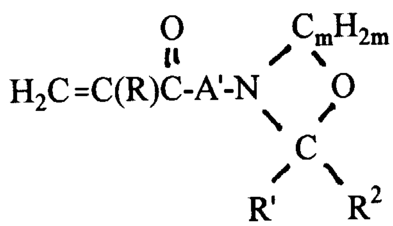

wherein

R is H or $CH_3$;
m is 2 or 3;
R', when not directly joined to $R^2$, is hydrogen, phenyl, benzyl, or a ($C_1$-$C_{12}$) alkyl group;
$R^2$, when not directly joined to R', is hydrogen or a ($C_1$-$C_4$) alkyl group; R'and $R^2$, when directly joined together, represent a tetra- or pentamethylenegroup; and
A' is $O(C_mH_{2m})$- or (O-alkylene)$_n$ in which (O-alkylene)$_n$ is a poly(oxyalkylene) group, having a molecular weight in the range from 88 to 348, in which the individual alkylene radicals are the same or different and are either ethylene or propylene; and

iv) acryloxy-ketimines and -aldimines of Formulae V and VI

$$(V)\ H_2C{=}(CR){-}COOA''N{=}Q$$

$$(VI)\ H_2C = C(R){-}CO{-}(D)_{n''-1} - (B)_{n'-1} - (A^{o})_{n^{o}-1} - N = Q$$

wherein: R is H or $CH_3$;

Q is an

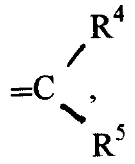

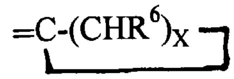

or $=CHR^3$ group;
$R^6$ is H or it may be methyl in one $CHR^6$ unit;
$R^5$ is ($C_1$-$C_{12}$)-alkyl or cyclohexyl;
$R^4$ is ($C_1$-$C_{12}$)-alkyl or cyclohexyl;
$R^3$ is phenyl, halophenyl, ($C_1$-$C_{12}$)-alkyl, cyclohexyl, or ($C_1$-$C_4$)-alkoxyphenyl;
A" is ($C_1$-$C_{12}$) alkylene;
A°, B and D are the same or different oxyalkylene groups of the formula $-OCH(R^7)-CH(R^7)-$wherein $R^7$ is H, $CH_3$, or $C_2H_5$;
x is 4 or 5;
n° is an integer having a value of from 1 to 200;
n' is an integer having a value of from 1 to 200; and
n" is an integer having a value of from 1 to 200, the sum of n -1, n'-1 and n"-1 having a value of from 2 to 200;

C) a volatile base in an amount effective to raise the pH of the composition to a point high enough where essentially all of the functional amino groups in the amine-containing polymer are in a nonionic state, and

D) optionally, a water-soluble or water-dispersible compound or complex of a multivalent metal.

**2.** An adhesive composition according to claim 1, comprising a said water-soluble or water-dispersible compound or complex of a multivalent metal.

**3.** An adhesive composition according to claim 2, wherein the said multivalent metal is zinc.

**4.** An adhesive composition according to any one of the preceding claims wherein said amine- containing polymer is formed from a monomer system containing at least 50% by weight of said amino- or imino-group containing monomer.

**5.** An adhesive composition according to any one of the preceding claims wherein the amine-containing polymer is derived from a monomer system containing, as said monomer, an N-acryloxyalkyl-oxazolidine.

**6.** An adhesive composition according to any one of the preceding claims wherein said volatile base is ammonia.

**7.** A method of adhesively securing a surface layer to a substrate, wherein there is used as the adhesive a composition as claimed in any one of the preceding claims.

**8.** A method according to claim 7, wherein the substrate is an exterior surface of a building or other outdoor structure and the surface layer is a solid or foamed layer of protective material.

**9.** A composite structure comprising a surface layer adhesively secured to an underlying substrate by means of a layer of adhesive, wherein the adhesive layer is formed from an adhesive composition as claimed in any one of claims 1 to 6.

**10.** A structure according to claim 9, wherein the said substrate is an exterior surface of a building or other outdoor structure, and the adhesively secured surface layer is a solid or foamed layer of protective material.

## Patentansprüche

1. Wässrige, nicht-zementartige, haftende Zusammensetzung, umfassend:

    (A) ein filmbildendes Latexpolymer mit anionischem Charakter;

    (B) ein wasserlösliches oder wasserdispergierbares Polymer, enthaltend eine Mehrzahl von funktionellen Aminogruppen und gebildet aus einem Monomerensystem, enthaltend wenigstens 20 Gew.-% eines Amino- oder Iminogruppen-haltigen Monomers gewählt aus:

    i) Aminoalkylvinylethern oder -sulfiden, worin die Alkylreste von der geradkettigen oder verzweigtkettigen Type sein können und 2 bis 3 Kohlenstoffatome aufweisen und worin das Stickstoffatom primär, sekundär oder tertiär sein kann;
    ii) Acrylamid oder Acrylestern der Formel II:

(II) 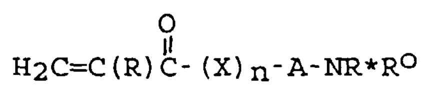

worin

R H oder $CH_3$ ist;
n 0 oder 1 ist;
X O oder N(H) ist;
wenn n null ist, A $O(CH_2)_x$ ist,
worin x 2 bis 3 ist oder $(O\text{-Alkylen})_y$, worin $(O\text{-Alkylen})_y$ eine Poly(oxyalkylen)gruppe ist, welche ein Molekulargewicht in dem Bereich von 88 bis 348 besitzt, in welcher die individuellen Alkylenreste gleich oder verschieden sind und entweder Ethylen oder Propylen sind;
und wenn n 1 ist, A eine Alkylengruppe mit 2 bis 4 Kohlenstoffatomen ist;
R* H, Methyl oder Ethyl ist;
$R^1$ H, Methyl oder Ethyl ist; und
$R^0$ H, Phenyl, Benzyl, Methylbenzyl, Cyclohexyl oder $(C_1\text{-}C_6)$-Alkyl ist;

iii) N-Acryloxyalkyloxazolidinen und N-Acryloxyalkyltetrahydro-1,2-oxazinen der Formel III:

(III) 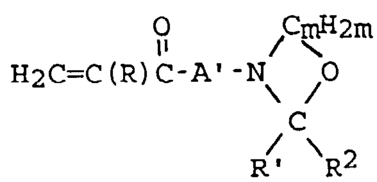

worin

R H oder $CH_3$ ist;
m 2 oder 3 ist;
R', wenn es nicht direkt an $R^2$ gebunden ist, Wasserstoff, Phenyl, Benzyl oder eine $(C_1\text{-}C_{12})$-Alkylgruppe ist;
$R^2$, wenn es nicht direkt an R' gebunden ist, Wasserstoff oder eine $(C_1\text{-}C_4)$-Alkylgruppe ist;
R' und $R^2$, wenn sie direkt aneinander gebunden sind, eine Tetra- oder Pentamethylengruppe darstellen; und
A' $0(C_mH_{2m})$- oder (O-Alkylen)n ist, in welchem $(O\text{-Alkylen})_n$ eine Poly(oxyalkylen) gruppe ist, welche ein Molekulargewicht in dem Bereich von 88 bis 348 besitzt, in welcher die individuellen Alkylenreste gleich oder verschieden sind und entweder Ethylen oder Propylen sind; und

iv) Acryloxyketiminen und -aldiminen der Formeln V und VI

$$\text{(V) } H_2C{=}(CR){-}COOA''NQ$$

$$\text{(VI) } H_2C{=}C(R){-}CO(D)_{n''-1}(B)_{n'-1}{-}(A^{o})^{o}_{n-1}{-}N{=}Q$$

worin: R H oder $CH_3$ ist;

Q eine

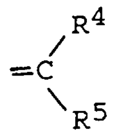

,

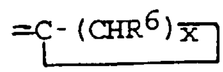

oder $=CHR^3$ Gruppe ist;
$R^6$ H ist oder Methyl in einer $CHR^6$-Einheit sein kann;
$R^5$ ($C_1$-$C_{12}$)-Alkyl oder Cyclohexyl ist;
$R^4$ ($C_1$-$C_{12}$)-Alkyl oder Cyclohexyl ist;
$R^3$ Phenyl, Halophenyl, ($C_1$-$C_{12}$)-Alkyl, Cyclohexyl oder ($C_1$-$C_4$)-Alkoxyphenyl ist;
A" ($C_1$-$C_{12}$)-Alkylen ist;
A°, B und D gleiche oder verschiedene Oxyalkylengruppen der Formel $-OCH(R^7)-CH(R^7)$-sind, worin $R^7$ H, $CH_3$ oder $CH_2H_5$ ist;
x 4 oder 5 ist;
n° eine ganze Zahl mit einem wert von 1 bis 200 ist;
n' eine ganze Zahl mit einem Wert von 1 bis 200 ist; und
n" eine ganze Zahl mit einem wert von 1 bis 200 ist, wobei die Summe von n-1, n'-1 und n"-1 einen Wert von 2 bis 200 aufweist;

C) eine flüchtige Base in einer Menge, die wirksam ist, um den pH-Wert der Zusammensetzung auf einen Wert anzuheben, der hoch genug ist, damit im wesentlichen sämtliche funktionellen Aminogruppen in dem aminhaltigen Polymer in einem nicht-ionischen Zustand sind, und

D) gegebenenfalls eine wasserlösliche oder wasserdispergierbare Verbindung oder einen Komplex eines mehrwertigen Metalls.

**2.** Haftende Zusammensetzung nach Anspruch 1, umfassend die wasserlösliche oder wasserdispergierbare Verbindung oder den Komplex eines mehrwertigen Metalls.

**3.** Haftende Zusammensetzung nach Anspruch 2, worin das mehrwertige Metall Zink ist.

**4.** Haftende Zusammensetzung nach einem der vorhergehenden Ansprüche, worin das aminhaltige Polymer aus einem Monomerensystem, enthaltend wenigstens 50 Gew.-% des Amino- oder Iminogruppen-haltigen Monomers, gebildet ist.

**5.** Haftende Zusammensetzung nach einem der vorhergehenden Ansprüche, worin das aminhaltige Polymer von einem Monomerensystem, enthaltend als dieses Monomer ein N-Acryloxyalkyloxyzolidin, abgeleitet ist.

**6.** Haftende Zusammensetzung nach einem der vorhergehenden Ansprüche, worin die flüchtige Base Ammoniak ist.

**7.** Verfahren zum anhaftenden Befestigen einer Oberflächenschicht an einem Substrat, worin als das Haftmittel eine Zusammensetzung, wie sie in einem der vorhergehenden Ansprüche beansprucht wurde, verwendet wird.

**8.** Verfahren nach Anspruch 7, worin das Substrat eine äußere Oberfläche eines Gebäudes oder einer anderen

Freiluftstruktur ist und die Oberflächenschicht eine feste oder geschäumte Schicht eines Schutzmaterials ist.

**9.** Kompositstruktur, umfassend eine Oberflächenschicht, welche haftend an ein darunterliegendes Substrat mittels einer Schicht eines Haftmittels befestigt ist, worin die haftende Schicht aus einer haftenden Zusammensetzung, wie sie in einem der Ansprüche 1 bis 6 beansprucht ist, gebildet ist.

**10.** Struktur nach Anspruch 9, worin das Substrat eine äußere Oberfläche eines Gebäudes oder einer anderen Freiluftstruktur ist und die haftend gesicherte Oberflächenschicht eine feste oder geschäumte Schicht eines Schutzmaterials ist.

**Revendications**

**1.** Composition adhésive aqueuse, qui n'a pas les caractéristiques d'un ciment, comprenant:

(A) un polymère en latex filmogène ayant un caractère anionique;

(B) un polymère soluble dans l'eau ou dispersible dans l'eau contenant de multiples groupes amino fonctionnels et formé à partir d'un système monomère contenant au moins 20% en poids d'un monomère contenant des groupes amino ou imino, choisi parmi:

i) les éthers ou sulfures aminoalkylvinyliques dans lesquels les groupes alkyle peuvent être à chaîne droite ou à chaîne ramifiée et comportent de deux à trois atomes de carbone et dans lesquels l'atome d'azote peut être primaire, secondaire ou tertiaire;
ii) l'acrylamide ou les esters acryliques de formule II:

$$\text{(II)}\qquad H_2C{=}C(R)\overset{\overset{\displaystyle O}{\|}}{C}\text{-}(X)_n\text{-}A\text{-}NR^{*}R^{0}$$

dans laquelle

R est H ou $CH_3$;
n est nul ou égal à 1;
X est O ou N(H);
lorsque n est nul, A est $O(CH_2)_x$, x étant égal à 2 ou à 3, ou $(O\text{-alkylène})_y$, où $(O\text{-alkylène})_y$ est un groupe poly(oxyalkylène) ayant une masse moléculaire dans la gamme de 88 à 348, dans lequel les radicaux alkylène individuels sont identiques ou différents et sont l'éthylène ou le propylène;
et, lorsque n est égal à 1, A est un groupe alkylène comportant de 2 à 4 atomes de carbone;
$R^*$ est H, un groupe méthyle ou un groupe éthyle;
$R^1$ est H, un groupe méthyle ou un groupe éthyle; et
$R^0$ est H, un groupe phényle, benzyle, méthylbenzyle, cyclohexyle ou alkyle en $C_1$-$C_6$;

iii) les N-acryloxyalkyl-oxazolidines et les N-acryloxyalkyltétrahydro-1,3-oxazines de formule III:

(III) 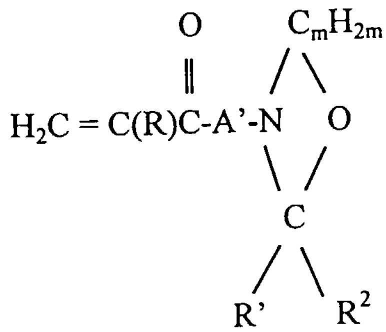

dans laquelle

R est H ou $CH_3$;
m est égal à 2 ou 3;
R', lorsqu'il n'est pas lié directement à $R^2$, est un atome d'hydrogène ou un groupe phényle, benzyle ou alkyle en $C_1$-$C_{12}$;
$R^2$, lorsqu'il n'est pas lié directement à R', est un atome d'hydrogène ou un groupe alkyle en $C_1$-$C_4$;
R' et $R^2$, lorsqu'ils sont liés directement l'un à l'autre, représentent un groupe tétra- ou penta-méthylène; et
A' est $O(C_mH_{2m})$- ou $(O\text{-alkylène})_n$, où $(O\text{-alkylène})_n$ est un groupe poly(oxyalkylène) ayant une masse moléculaire dans la gamme de 88 à 348, dans lequel les radicaux alkylène individuels sont identiques ou différents et sont l'éthylène ou le propylène; et

iv) les acryloxy-cétimines et les acryloxy-aldimines de formules V et VI

$$\text{(V)}\ H_2C{=}(CR){-}COOA''N{=}Q$$

$$\text{(VI)}\ H_2C = C(R){-}CO(D)_{n''-1} - (B)_{n'-1} - (A^{o})_{n^{o}-1}{-}N = Q$$

dans lesquelles:

R est H ou $CH_3$;
Q est un groupe

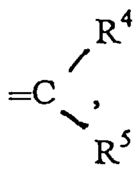 , 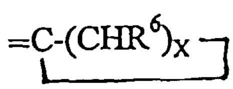

ou $=CHR^3$;
$R^6$ est H, ou peut être un groupe méthyle dans un motif $CHR^6$;
$R^5$ est un groupe alkyle en $C_1$-$C_{12}$ ou cyclohexyle;
$R^4$ est un groupe alkyle en $C_1$-$C_{12}$ ou cyclohexyle;
$R^3$ est un groupe phényle, halogénophényle, alkyle en $C_1$-$C_{12}$, cyclohexyle ou alcoxy(en $C_1$-$C_4$)phényle;
A" est un groupe alkylène en $C_1$-$C_{12}$;
A°, B et D sont des groupes oxyalkylène identiques ou différents, de formule $-OCH(R^7)-CH(R^7)-$, dans laquelle $R^7$ est H, $CH_3$ ou $C_2H_5$;
x est égal à 4 ou 5;
n° est un nombre entier ayant une valeur de 1 à 200;
n' est un nombre entier ayant une valeur de 1 à 200; et

n" est un nombre entier ayant une valeur de 1 à 200, la somme de n-1, n'-1 et n"-1 ayant une valeur de 2 à 200;

(C) une base volatile, en quantité efficace pour élever le pH de la composition jusqu'à une valeur suffisamment élevée, à laquelle la quasi totalité des groupes amino fonctionnels dans le polymère contenant une amine sont dans un état non ionique, et

(D) le cas échéant, un composé ou un complexe d'un métal multivalent soluble dans l'eau ou dispersible dans l'eau.

**2.** Composition adhésive selon la revendication 1, comprenant ledit composé ou complexe d'un métal multivalent soluble dans l'eau ou dispersible dans l'eau.

**3.** Composition adhésive selon la revendication 2, dans laquelle ledit métal multivalent est le zinc.

**4.** Composition adhésive selon l'une quelconque des revendications précédentes, dans laquelle ledit polymère contenant une amine est formé à partir d'un système monomère contenant au moins 50% en poids dudit monomère contenant des groupes amino ou imino.

**5.** Composition adhésive selon l'une quelconque des revendications précédentes, dans laquelle ledit polymère contenant une amine est dérivé d'un système monomère contenant, en tant que monomère, une N-acryloxyalkyloxazolidine.

**6.** Composition adhésive selon l'une quelconque des revendications précédentes, dans laquelle ladite base volatile est de l'ammoniac.

**7.** Procédé pour fixer par adhérence une couche superficielle à un substrat, dans lequel on utilise, comme adhésif, une composition selon l'une quelconque des revendications précédentes.

**8.** Procédé selon la revendication 7, dans lequel le substrat est une surface extérieure d'un bâtiment ou d'une autre structure d'extérieur et la couche superficielle est une couche pleine ou expansée de matériau protecteur.

**9.** Structure composite comprenant une couche superficielle fixée par adhérence à un substrat sous-jacent au moyen d'une couche d'adhésif, dans laquelle la couche d'adhésif est formée à partir d'une composition adhésive selon l'une quelconque des revendications 1 à 6.

**10.** Structure selon la revendication 9, dans laquelle ledit substrat est une surface extérieure d'un bâtiment ou d'une autre structure d'extérieur et la couche superficielle collée par adhérence est une couche pleine ou expansée de matériau protecteur.